# EUROPÄISCHE PATENTSCHRIFT

(11) **EP 0 734 769 B1**
(45) Veröffentlichungstag und Bekanntmachung des Hinweises auf die Patenterteilung: **27.11.2002**
(21) Anmeldenummer: 96104922.8
(22) Anmeldetag: 28.03.1996
(51) Int. Cl.: B01L 3/14, G01N 35/00

(54) **System und Verfahren zum Verschluss von Gefässen**
System and process for closing containers
Système et procédé pour la fermeture de récipients

(30) Priorität: 31.03.1995 DE 29505652 U; 01.04.1995 DE 29505707 U; 09.10.1995 DE 29515990 U
(43) Veröffentlichungstag der Anmeldung: 02.10.1996
(73) Patentinhaber: Roche Diagnostics GmbH, 68298 Mannheim (DE)
(72) Erfinder: Bienhaus, Gerhard, Dr., 82407 Wielenbach (DE); Fritz, Michael, 68647 Biblis (DE); Schwab, Jürgen, 68775 Ketsch (DE); Geisler, Edda, 68199 Mannheim (DE); Harttig, Herbert, Dr., 67122 Altrip (DE); Macho, Heinz, 64658 Fürth (DE)

(56) Entgegenhaltungen:
- EP-A- 0 076 772
- EP-A- 0 557 828
- EP-A- 0 676 643
- WO-A-88/01605
- FR-A- 1 407 571
- US-A- 4 083 788
- US-A- 4 131 549
- US-A- 4 915 255

## Beschreibung

Gegenstand der Erfindung sind ein System bestehend aus einem Deckel, einem Formkörper und einem Gefäß zum Verschluß einer Öffnung eines Gefäßes, und ein Verfahren zum Verschluß eines Gefäßes.

Deckel werden üblicherweise zum Verschluß von Gefäßen verwendet, um ein Eindringen von Einflüssen aus der Umgebung in das Gefäß zu reduzieren bzw. das Austreten des Inhalts eines Gefäßes in die Umgebung zu vermeiden. Insbesondere wenn das Gefäß zur Aufnahme einer Probe gedacht ist, deren Bestandteile später weiter verarbeitet oder analysiert werden sollen, ist in vielen Fällen ein Deckel obligatorisch. Dies gilt in erhöhtem Maße auf dem Gebiet der Analytik im Gesundheitswesen, der Lebensmittelanalytik, der Umweltanalytik und der Molekularbiologie. Insbesondere bei besonders niedrig konzentrierten Analyten und Analyten, die eine hohe Ähnlichkeit mit anderen Analyten haben, wirken sich Verschmutzungen der Proben aus der Umgebung nachhaltig auf das Analyseergebnis aus. In besonderem Maße betroffen ist hier die Nukleinsäureanalytik. Die Vermeidung von Kontaminationen sowohl in ihrer Entstehung (aktive Vermeidung) als auch in ihrem Eintrag in die Probe (passive Vermeidung) hat sich als ein zentrales Erfordernis für die Nukleinsäurediagnostik herausgestellt.

Nukleinsäurediagnostische Tests werden derzeit insbesondere in Gefäßen ausgeführt, die entweder auf der generellen Konstruktion von Eppendorf-Gefäßen (Einzelgefäße) beruhen oder aber auf der Form von Mikrotiterplatten (Mehrfachvertiefungen) aufbauen. Sie sind im allgemeinen rund und mit Hilfe eines Deckels verschließbar. Die bisher vorgeschlagenen Deckel für solche Gefäße sind entweder fest an den Probengefäßkörper gebunden oder mit Deckeln für benachbarte Gefäße fest verbunden. Dies erleichtert die manuelle Handhabbarkeit der Deckel für Vorgänge beim Öffnen und Schließen des Gefäßes. Man muß sich hierbei auch vor Augen führen, daß die Gefäße wegen der geringen zur Verfügung stehenden Probenmengen recht klein sind. Dies gilt insbesondere für Formate, bei denen eine Vielzahl von Reaktionsgefäßen nebeneinander auf kleinstem Raum untergebracht sind, wie beim 96 well Mikrotiterplattenformat. Die bisher vorgeschlagenen Deckelkonstruktionen waren somit nicht oder nur schwer automatengängig, d. h. ein Öffnen und Schließen mit Hilfe von Geräten war schwierig, wenn nicht sogar ausgeschlossen.

In DE-A-2419510 ist ein elastomerer Stopfen zum Verschließen eines Behälters beschrieben, der jedoch den Nachteil hat, daß er nur manuell entfernt werden kann. Er weist eine Pressung auf, so daß die zur Entfernung des Deckels erforderlichen Kräfte sehr groß sind. Der Deckel ist nicht zum Ergreifen mit einem Gerät geeignet.

In DE-A-1432114 ist ein Stopfen beschrieben, der eine Pipette integriert enthält. Dazu hat der Deckel einen hohlen birnenförmigen Körper mit hochelastischen Wandungen, mit dem Flüssigkeit aus der Flasche in die Pipette aufgenommen und wieder ausgestoßen werden kann.

In DE-U8622818 ist eine Flasche zur Züchtung und Erhaltung von Zellkulturen beschrieben, die mit einem Schraubverschluß verschlossen werden kann, welche ein Filterelement aufweist, dessen Porengröße einen Gasaustausch ermöglicht und eine Kontamination durch Mikroorganismen verhindern. Hierbei handelt es sich um einen Schraubverschluß. Außerdem weist der Verschluß kein Element zum Ergreifen eines in das Gefäß einführbaren Formkörpers auf. Darüber hinaus hat er auch kein Bauteil zum form- und kraftschlüssigen Ergreifen des Deckels mit Hilfe eines Gerätes.

In US-A-4,956,298 ist ein Gefäß mit daran befestigtem Deckel beschrieben. Die Tatsache, daß Deckel und Gefäß fest miteinander verbunden sind, verhindert die Funktion des Deckels zum Ergreifen eines in das Gefäß einführbaren Formkörpers. Darüber hinaus enthält der Deckel kein sich im wesentlichen senkrecht zur Verschlußöffnung erstreckendes Bauteil zum Ergreifen des Deckels.

In US-A-4,713,219 ist ebenfalls ein Gefäß mit daran befestigtem Deckel beschrieben, welches nicht zum Ergreifen eines in das Gefäß einführbaren Formkörpers geeignet ist. Außerdem enthält der Deckel kein Bauelement zum Ergreifen des Deckels.

In FR-1066053 ist ein Deckel beschrieben, der nicht in der Lage ist, Formkörper, die in das Gefäß einführbar sind, zu ergreifen. Ein formschlüssiges Ergreifen des Deckels ist nicht möglich.

In CH-267666 ist ein Deckel beschrieben, der kein Bauelement zum form- und kraftschlüssigen Ergreifen des Deckels enthält.

In DE-G-8503219 ist ein Verschluß mit Entgasungsventil beschrieben, der eine Entgasungsöffnung enthält, die eine Filterscheibe enthält. Dieser Verschluß ist nicht zum Ergreifen eines in das Gefäß einführbaren Formkörpers ausgelegt. Darüber hinaus enthält der Deckel kein Bauelement zum form- und kraftschlüssigen Ergreifen des Deckels.

In DE-A-4315726 ist ein Gefäß mit fest daran befestigtem Deckel beschrieben, wobei am Deckel ein schräg abstehendes Bauelement zum manuellen Ergreifen des Deckels befestigt ist. Es ist jedoch nicht möglich, mit diesem Deckel einen Formkörper in das Gefäß einzuführen.

In DE-A-4222560 ist ein Verschlußstopfen beschrieben, der an seiner Unter- und Oberseite Öffnungen und im Innenraum ein Filtermaterial enthält. Dieser Deckel ist nicht zum Ergreifen eines in das damit verschlossene Gefäß einführbaren Formkörpers geeignet und enthält keine Bauteile zum form- und kraftschlüssigen Ergreifen des Deckels.

In FR-1407571 ist ein Gerät zum Herausziehen eines Verschlusses beschrieben. Dieses Gerät hat jedoch den Nachteil, daß es zum positionsgenauen Einführen des Verschlusses nicht geeignet ist, da mit der Hand ein ständiger Druck auf das Gerät ausgeübt werden muß, um den Verschluß zu halten.

Gegenstand ist nun ein Deckel zum Verschluß einer Öffnung eines Gefäßes enthaltend ein Bauelement, das der zu verschließenden Öffnung des Gefäßes angepaßt ist, und ein sich im wesentlichen senkrecht zu der Öffnung erstreckendes Bauteil zum form- und kraftschlüssigen Ergreifen des Deckels und Öffnen und Verschließen des Gefäßes mit diesem Deckel.

Es wurde gefunden, daß das Ergreifen von Deckeln auf besonders kleinen Raum besonders günstig durch Vorsehen eines sich im wesentlichen senkrecht zu der Öffnung des Gefäßes erstreckenden Bauteils erreicht werden kann. Dieses Bauteil ragt bevorzugt nicht über die seitliche Außenwand des Gefäßes hinaus. Die bisher verwendeten Deckel besitzen horizontal (seitlich) weit über die Außenwände des Gefäßes hinausragende Bauteile.

Bevorzugt handelt es sich bei dem Deckel um einen Einzelverschluß, der reversibel vollständig von dem Gefäß getrennt werden kann.

Gefäße, die durch den Deckel verschlossen werden können, sind ihrer Art nach nur durch das Vorhandensein einer verschließbaren Öffnung (A10) beschränkt. Diese Öffnung ist zweckmäßigerweise an einer gut zugänglichen Stelle positioniert.

Die Vorteile des Deckels werden insbesondere in Gefäßen zum Tragen kommen, die in der Analytik von Inhaltsstoffen in Proben, wie z. B. Körperflüssigkeiten, verwendet werden. Daher ist das zu verschließende Gefäß bevorzugt ein Probengefäß A.

Probengefäße (A) im Sinne der Erfindung sind Gefäße, in denen Proben, insbesondere in flüssiger Form, aber auch in an eine feste Matrix gebundene Form, aufbewahrt werden können, jedoch auch Gefäße, in denen Proben in originaler oder bereits aufgereinigter Form, bearbeitet werden können. Sie haben mindestens eine Öffnung (A10), können jedoch auch weitere Öffnungen aufweisen. Eine weitere Öffnung kann beispielsweise eine Auslaßöffnung (A11) sein. Die Auslaßöffnung (A11) kann bevorzugt ebenfalls verschlossen werden. Bei der Öffnung (A10) handelt es sich bevorzugt um eine Öffnung, durch welche eine Probe in das Gefäß eingeführt werden kann.

Probengefäße im Sinne der Erfindung können praktisch jede äußere Form aufweisen. Besonders bevorzugt sind jedoch Probengefäße mit hohlzylindrischer Gestalt, wie sie z. B. in Mikrotiterplatten anzutreffen sind. Bevorzugte Probengefäße haben eine im wesentlichen zylindrische Form mit einer Gesamtlänge von zwischen 100 und 10 mm, besonders bevorzugt von ca. 50 mm, einem Außendurchmesser von zwischen 20 und 5 mm, besonders bevorzugt von ca. 9 mm und einem Innendurchmesser von 5 - 1 mm weniger als der Außendurchmesser, besonders bevorzugt von ca. 7 mm. Die Öffnung (A10), welche durch den erfindungsgemäßen Deckel verschlossen werden kann, befindet sich bevorzugt an einem Ende dieses Hohlzylinders, besonders bevorzugt am oberen Ende.

Das Bauelement (B10) ist, um einen möglichst dichten Verschluß des Gefäßes zu gewährleisten, so gestaltet, daß es entweder den Teil des Gefäßes, der die Öffnung umgibt (z. B. den Rand), von außen eng umfaßt, oder aber, im bevorzugten Falle, den die Öffnung (A10) im Innern des Gefäßes umgebenden Teil des Gefäßes schlüssig angepaßt ist. Bauelement (B10) ist hierzu beispielsweise bevorzugt ein in das Probengefäß hineinragender umlaufender Steg, d. h. ein Ring, ausgehend von dem horizontalen, die Öffnung überdeckenden Teil (B17) des Deckels. An diesem Steg können außerdem Dichtlippen (B16) vorgesehen sein, die eine weitere Verbesserung der Abdichtung zum Probengefäß hin gewährleisten. Bevorzugt wird die Dimensionierung des Bauelements (B10) so gewählt, daß der Deckel nach einer gewünschten Zeit wieder von dem Probengefäß zu entfernen ist, ohne daß das Probengefäß oder der Deckel zerstört werden. Der Deckel weist am Teil, das aus dem Gefäß herausschaut, bevorzugt einen umlaufenden Rand (Überhang B19) auf, der als Anschlag für das Einschieben des Deckels in das Gefäß und als zusätzlicher Kontaminationsschutz dienen kann.

Das Bauelement (B11) befindet sich bevorzugt innerhalb des vom Bauelement (B10) umgebenen Raumes. Wie das Bauelement (B10) ist auch das Bauelement (B11) bevorzugt so gestaltet, daß es an die innere Kontur (C16) des Formkörpers (C) so angepaßt ist, daß der Formkörper nach Aufdrücken des Bauelements auf eine Öffnung des Formkörpers von selbst auf dem Bauelement verbleibt. Auch hier handelt es sich bevorzugt um einen ringförmig umlaufenden Steg, der von innen oder außen an den die Öffnung des Formkörpers umgebenden Teil des Formkörpers schlüssig angepaßt ist. Bevorzugt ist die äußere Fläche des umlaufenden Stegs leicht konisch ausgebildet, so daß die Konizität das Ergreifen und Festhalten des Formkörpers bewirkt. Die Öffnung des Formkörpers wird daher ebenfalls durch den erfindungsgemäßen Deckel verschlossen.

Eine Erkenntnis der Erfindung ist, daß gerade das Öffnen und Verschließen von Probengefäßen mit einer besonderen Gefahr für den Ein- und Austrag von Kontaminationen behaftet ist. Außerdem hat es sich als nachteilig erwiesen, daß bei Vorgängen, welche die Entfernung von Flüssigkeiten oder Gasen aus dem Probengefäß mit sich bringen, der Deckel entfernt werden muß. Während dieser Zeit ist die Kontaminationsgefahr besonders hoch. Ein Vorteil einer besonderen Ausführungsform des erfindungsgemäßen Deckels ist, daß der Deckel auch während der Vorgänge, die einen Gasaustausch mit der Umgebung mit sich bringen, z. B. Absaug- und Abkühl-/Heizvorgängen, auf dem Probengefäß verbleiben kann. Hierzu sind in dem Deckel, insbesondere an seiner Oberseite Luftdurchtrittsöffnungen (B13) vorgesehen. Es hat sich als besonders zweckmäßig erwiesen, diese Belüftungskanäle durch ein Filterelement (B14) im Innenraum des Deckels gegen den Innenraum des Probengefäßes bzw. den Innenraum des Formkörpers abzudecken. Diese Filter sind bevorzugt aus einem Kunststoff-Sintermaterial aus Polyethylen, Polypropylen oder Polyethersulfon bzw. Polysulfon aufgebaut. Solche Filter sind beispielsweise als Sterilfilter erhältlich. Der Filter dient insbesondere dazu, eventuell bei Be- und Entlüftungsvorgängen während eines Probenbearbeitungsprozesses, z. B. eines Probenvorbereitungsprozesses, (beim Heizen, Mischen und Absaugen sowie Eindrücken von Flüssigkeiten in den Innenraum des Formkörpers) entstehende Aerosole am Austritt in die Umgebung zu hindern. Gleichzeitig wird das Einschleppen von unerwünschten Aerosolen/Bestandteilen der Umgebungsluft in das Probengefäß verhindert. Der Einbau des Filters in den Deckel wird besonders zweckmäßig so realisiert, daß die Querschnitte der Belüftungskanäle nur maximal 10 % der gesamten Nutzfläche des Filters beanspruchen. Besonders bevorzugt liegt das Filtermaterial nicht vollflächig auf dem die Öffnung überdeckenden Teil (B17) des Deckels auf, sodaß zwischen der die Öffnungen (B13) aufweisenden Fläche des Deckels und der Oberseite (Nutzfläche) des Filters ein Zwischenraum verbleibt. Hierzu können beispielsweise Abstandshalter (B20) an der Fläche befertigt sein. Hierdurch kommt es nicht zu einem zu großen Druckverlust und dennoch kann die gesamte Fläche des Sintermaterials zur Durchströmung genutzt werden.

In einer zweiten Ausführungsform ergreift und verschließt der Deckel als Formkörper (C) einen Stempel (E), der ebenfalls einen Innenraum (E12) hat. Hierbei sind, da bei Gebrauch des Stempels (E) keine Heiz-/Bekühlvorgänge/Absaugvorgänge durchgeführt werden, keine durch Aerosolfilter verschlossenen Luftdurchöffnungen erforderlich. Somit kann das Bauteil (B11) auch von außen über die Entnahmeöffnung (E14) des Stempels schließen. Der Stempel (E) ist für ein Verfahren zur Isolierung von Nukleinsäuren aus einer porösen, komprimierbaren Matrix so konstruiert, daß er in ein Gefäß hineinragt, welches die poröse, komprimierbare Matrix enthält. Das Gefäß wird in diesem Fall Elutionsgefäß (D) genannt. Die Matrix ist bevorzugt Teil eines Formkörpers (C), in dessen Innenraum der Stempel hineinragt. Durch Druck auf den Deckel (B) wird der Stempel gegen die Matrix gepreßt, und die Flüssigkeit mit den darin befindlichen Nukleinsäuren dringen in den Innenraum des Stempels ein.

Der Verschluß und das Ergreifen der Gefäße mit dem erfindungsgemäßen Deckel ist bevorzugt reversibel. Sofern zwei verschiedene Gefäße gleichzeitig verschlossen werden sollen, sind die Kraftschlüsse zu jedem Gefäß bevorzugt verschieden. In der oben genannten ersten Ausführungsform ist der Kraftschluß zu dem Formkörper (C) größer als zu dem Probengefäß (A). In der zweiten Ausführungsform ist der Kraftschluß zu dem Elutionsgefäß (D) und dem Stempel (E) so gering, daß sich der Deckel (B') von beiden löst, bevor sich der Stempel aus dem Elutionsgefäß löst.

Es befindet sich an dem Teil eines Deckels, welcher dem Probengefäß abgewandt ist (Außenseite) ein sich im wesentlichen senkrecht zu der Verschlußöffnung erstreckendes Bauteil (B12) zum Ergreifen des Deckels. Der Begriff "im wesentlichen senkrecht" soll im Sinne der Erfindung bedeuten, daß das Bauteil (B12) eine Symmetrieachse oder Ebene aufweist, die zu einer über die Verschlußöffnung gedachten Ebene einen Winkel zwischen 85 und 90 ° aufweist. Besonders bevorzugt ragt das Bauteil exakt senkrecht (mit Ausnahme der Fertigungstoleranzen) von der gedachten Ebene weg. Das Bauteil (B12) kann hierbei im verschlossenen Zustand des Gefäßes (A) außerhalb des zu verschließenden Gefäßes liegen, bevorzugt ist es aber innerhalb des zu verschließenden Gefäßes positioniert. Bevorzugt ist das Bauteil rotationssymmetrisch, insbesondere zylindrisch, wobei die Länge des Zylinders größer ist als sein Durchmesser. Bevorzugt wird der Durchmesser dieses Zylinders möglichst klein gewählt. Insbesondere ist der Durchmesser des Zylinders kleiner als die Hälfte des Durchmessers des die Öffnung (A10) abdeckenden Teils des Deckels. Dies gewährleistet die sichere Aufnahme des Deckels über das Bauelement (B12) durch eine Greifzange in Form eines sogenannten Deckelhändlers. Diese Greifzange kann z. B. die Konstruktion der üblicherweise verwendeten Druckbleistifte haben, bei denen sich die Zange bei Druck auf einen hierfür vorgesehenen mechanischen Teil zur Aufnahme des Bauteils öffnet und sich bei Reduzierung des Druckes von außen um den Zylinder schließt. Es hat sich erwiesen, daß diese Art des form- und kraftschlüssigen Ergreifens von Bauelementen für die Verwendung des Deckels zum Verschluß von Probengefäßen besonders einfach ist und sich sogar auf kleinstem Raum, wie er in 96 well Mikrotiterplattenformaten gegeben ist, realisieren läßt. Für die zuverlässige Funktion (Festhalten, Positionieren) ist es besonders zweckmäßig, wenn das Bauelement (B12) eine vergleichsweise lange Führung in der Greifzange aufweist. Das Bauelement (B12) kann Rillen (B18) aufweisen, welche ein Abrutschen der Greifzange an dem Bauteil (B12) verhindern und eine zuverlässige Haltefunktion gewährleisten.

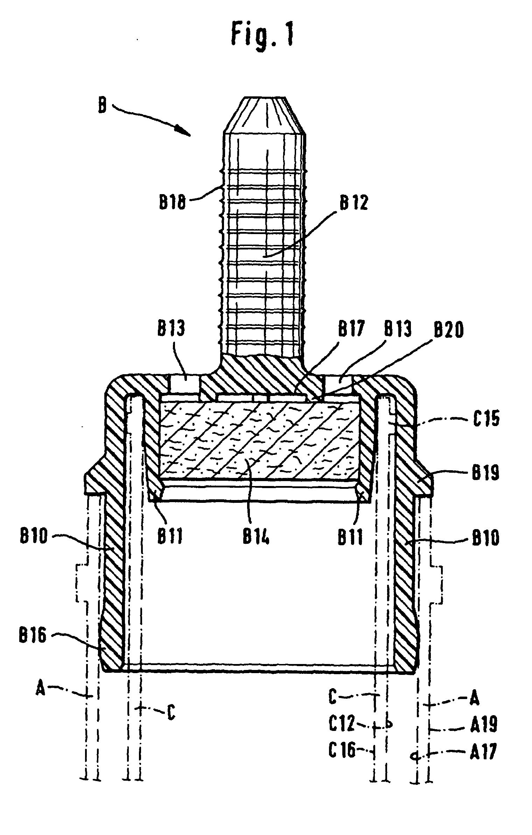

Eine besonders bevorzugte Ausführungsform 1 des Deckels, welche in Figur 1 im Längsschnitt gezeigt ist, besteht aus einer zylinderförmigen Kappe (B) mit aufgesetztem zylinderförmigem Stift (B12) und mehreren Belüftungskanälen (B13), welche von innen mit einem Aerosolfilter (B14) abgedichtet sind. Die ringförmigen Stege (B11) dienen außerdem zum Befestigen des Filters (B14). Die Wände eines Probegefäßes (A) mit einer inneren Form (A17) und einer äußeren Form (A19) und eines Formkörpers (C) mit einer inneren Kontur (C16) und einer äußeren Kontur (C12) sind angedeutet.

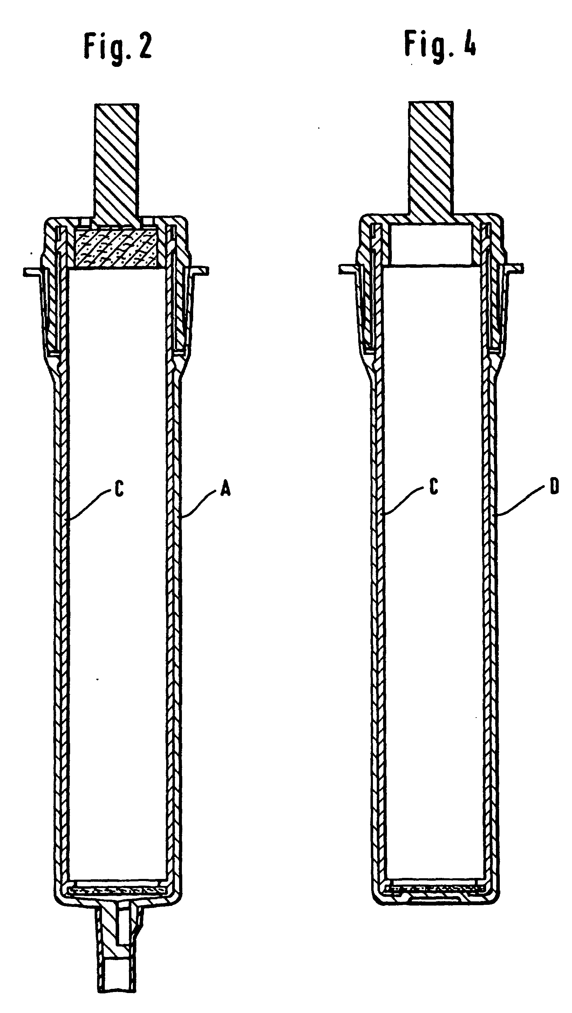

In Figur 2 ist ein Deckel (B) in einem Zustand gezeigt, in dem er ein Probengefäß (A) und einen Formkörper (C) verschließt (Ausführungsform 1).

In Figur 3 mit den Teilfiguren 3a und 3b sind schematisch die Zwischenstufen eines Nukleinsäureisolierungsverfahrens gezeigt.

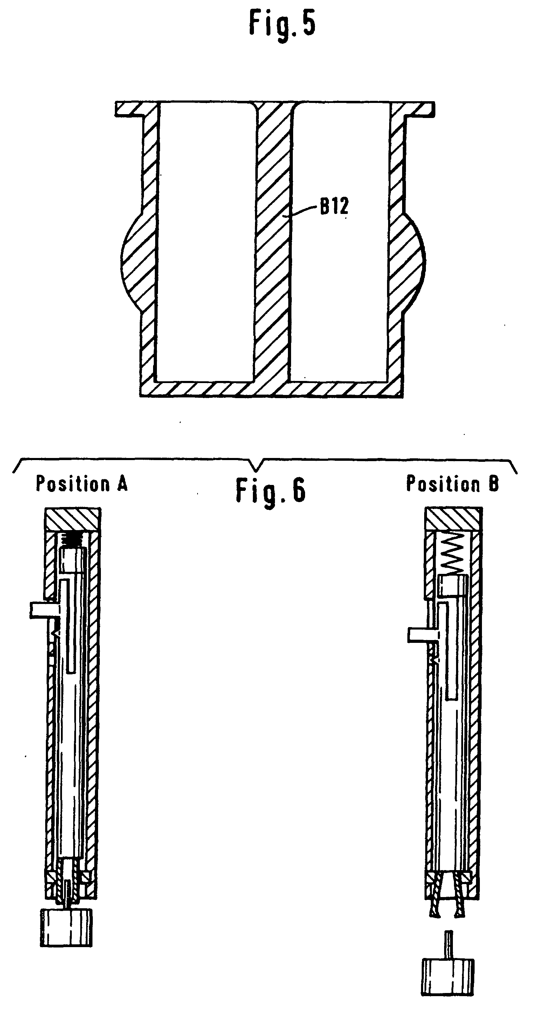

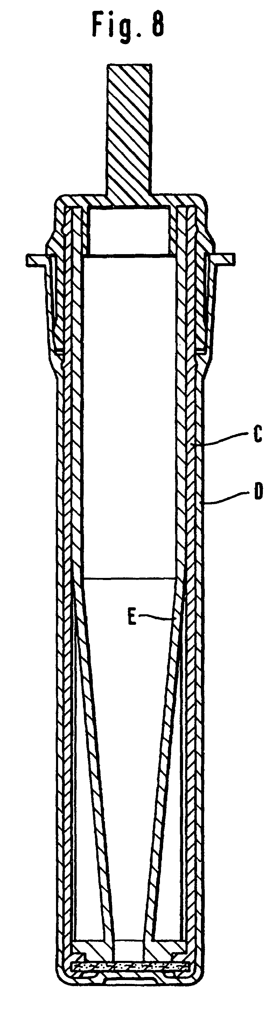

In Figur 4 ist ein Deckel (B') in einem Zustand gezeigt, in dem er einen Formkörper (C) und ein Elutionsgefäß (D) verschließt (Ausführungsform 2). Der Zustand, in dem auch noch der Stempel (E) verschlossen und ergriffen ist, ist in Figur 3 (zweitletzte Teilzeichnung) bzw. Figur 8 zu sehen.

In Figur 5 ist ein Deckel gezeigt, bei dem das Bauteil (B12) innerhalb des Probengefäßes liegt.

In Figur 6 ist ein Gerät zum Ergreifen der erfindungsgemäßen Deckel schematisch gezeigt. Schematisch sind auch Bauteile zum Einrasten des jeweiligen Betriebszustandes (leer, Position B; greifen, Position A) gezeigt.

In Figur 7 ist ein Längsschnitt eines weiter fortentwickelten Geräts zum Ergreifen des Deckels gezeigt. Es funktioniert auf dem Prinzip eines Druckbleistifts.

In Figur 8 ist ein Device zu zusammengebautem Zustand mit einem Deckel, einem Formkörper C, einem Elutionsgefäß D und einem Stempel E gezeigt.

In Figur 9 ist ein weiterer Deckel gezeigt, bei dem das Bauteil (B12) innerhalb des Probengefäßes liegt. Auch dieser Deckel enthält einen Überhang und eine Dichtlippe.

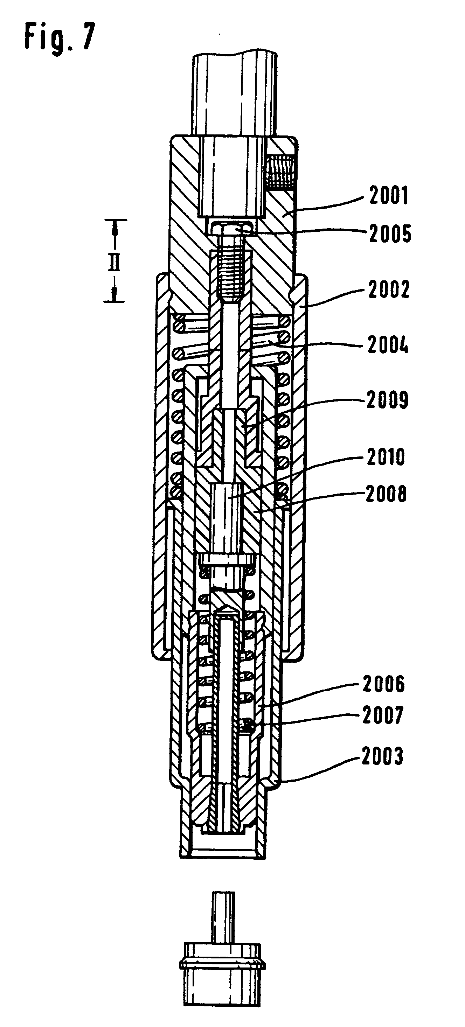

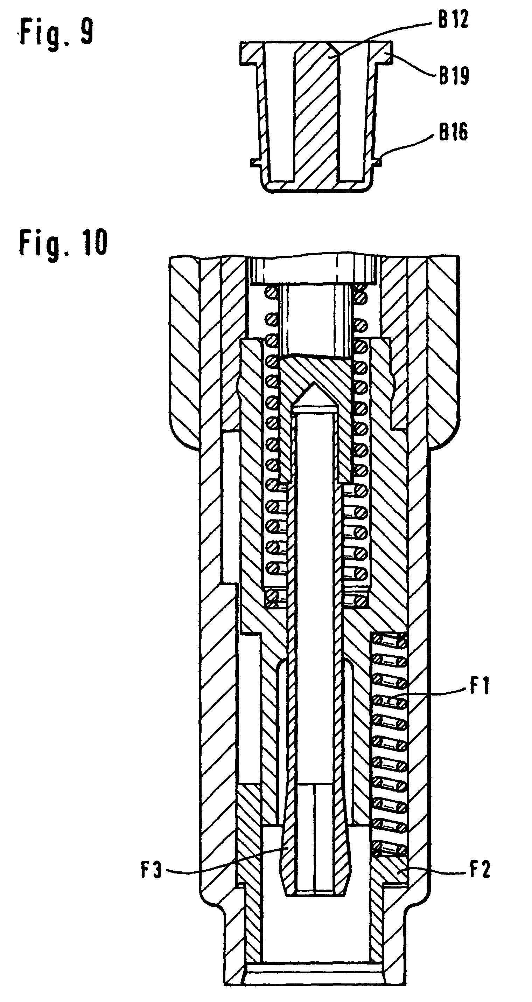

In Figur 10 ist der untere Teil des in Figur 7 gezeigten Gerätes zum Ergreifen des Deckels abgebildet, jedoch ist hier eine Feder (F1) vorgesehen, die an ihrem dem Deckel zugewandten Ende ein Bauteil enthält, das auf den ergriffenen Deckel (B) drücken kann. Dies kann z. B. ein Ring sein. In entspanntem Zustand ragt das Bauteil (F2) über die Unterseite des Greifmechanismus (F3) hinaus. Die Feder (F1) wird durch Ergreifen des Deckels und Zurückschieben des Bauteils (F2) gespannt, so daß auf den Deckel in ergriffenem Zustand ein ständiger Druck in Richtung aus dem Greifmechanismus heraus ausgeübt wird, der jedoch nicht so groß ist, daß der Deckel im ergriffenen Zustand aus dem Greifmechanismus herausgeschoben wird. Die Feder (F1) ist daher bevorzugt sehr leicht. Die Feder (F1) in Zusammenwirkung mit dem Bauteil (F2) hat die Funktion, den Deckel, wenn er von dem Greifmechanismus freigegeben wurde, aus dem Greifmechanismus zu schieben. Dies ist vorteilhaft, da es sich herausgestellt hat, daß der Deckel manchmal nicht verläßlich nur aufgrund der Schwerkraft aus dem Greifmechanismus herausfällt.

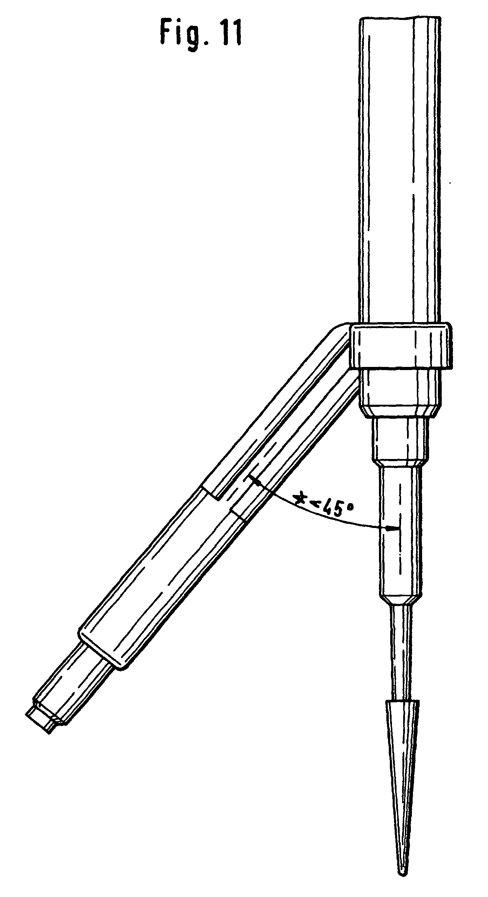

In Figur 11 ist ein Deckelbearbeitungsgerät gezeigt, welches ein Bauteil enthält, das das Bauteil (B12) des Deckels festklemmen kann, und darüber hinaus ein Bauteil, mit dem der Deckel aus dem oben genannten Bauteil herausgedrückt werden kann. Dieses Deckelbearbeitungsgerät kann in vorteilhafter Weise mit einer Vorrichtung zum Pipettieren von Flüssigkeiten kombiniert werden. Als eine Vorrichtung zum Pipettieren der Flüssigkeit kann eine kommerziell erhältliche Kolbenhubpipette (z. B. Firma Eppendorf, BRD) eingesetzt werden. Als besonders bevorzugt hat es sich erwiesen, wenn die Längsachsen der beiden Vorrichtungen einen Winkel von weniger als 90°, besonders bevorzugt weniger als 45°, im Beispielsfall 40°, bilden. Mit einem solchen Gerät können zeitsparenderweise die beiden wesentlichen Vorgänge in Analyseverfahren, nämlich Pipettierungen und Öffnen von Gefäßen abgearbeitet werden.

Im Folgenden werden Abmessungen angegeben, wie sie sich als zweckmäßig für den erfindungsgemäßen Deckel nach der ersten Ausführungsform erwiesen haben.

| | |
|---|---|
| Außendurchmesser des Deckels | 8,8 mm |
| Innendurchmesser des Deckels | 7,2 mm |
| Höhe des Deckels inklusive Bauteil (B12) | 14,6 mm |
| Durchmesser der Belüftungskanäle (B13) | 0,8 mm |
| Höhe der Belüftungskanäle (B13) | 0,315 mm |
| Dicke des Filters (B14) | 1,6 mm |
| Radius des Bauelements (B11) | 2,5 mm |
| Wandstärke des Bauteils (B11) | 0,4 mm |
| Höhe des Bauteils (B12) | 7,0 mm |
| Durchmesser des Bauteils (B12) | 1,9 mm |

Die entsprechenden Innenmaße des Probengefäßes (A) und des Formkörpers (C) sind auf die genannten Maße angepaßt.

Deckel (B) können auf einfache Weise durch Spritzgrußverfahren aus thermoplastischen Kunststoffen, bevorzugt Polypropylen (Typ Novolen® 1100 U.CX) hergestellt werden. Auch die hier erwähnten Gefäße können so hergestellt werden. Eventuell eingesetzte Filtermaterialien können an die vorgesehenen Stellen eingepreßt oder/und geklebt oder verschweißt werden. Das Material, aus dem der Grundkörper des Deckels hergestellt ist, ist daher unter den normalen Gebrauchsbedingungen nicht deformierbar.

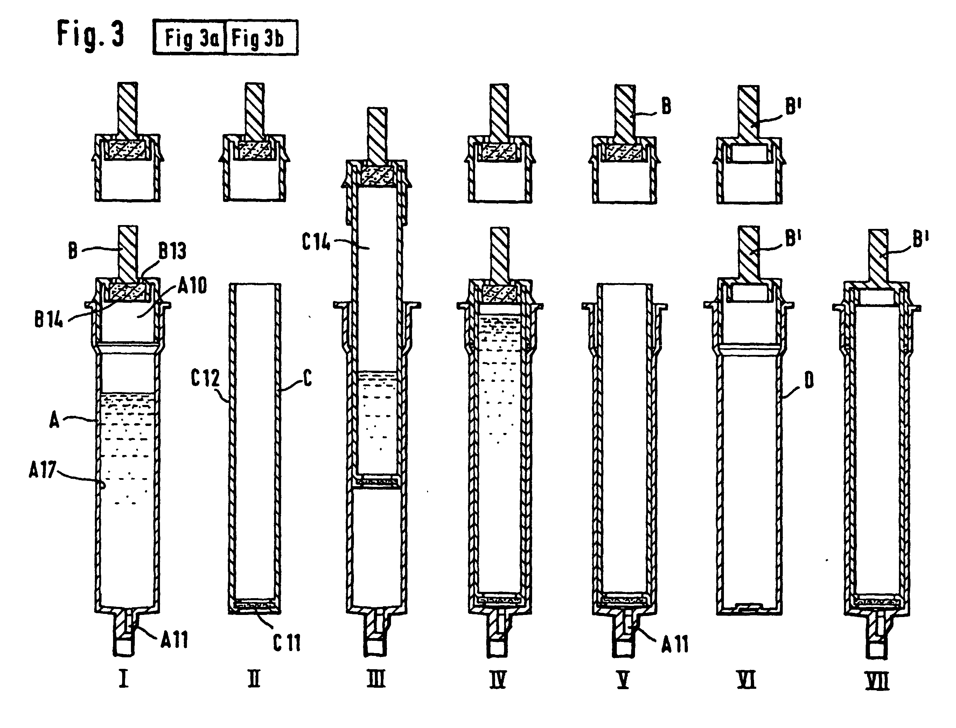

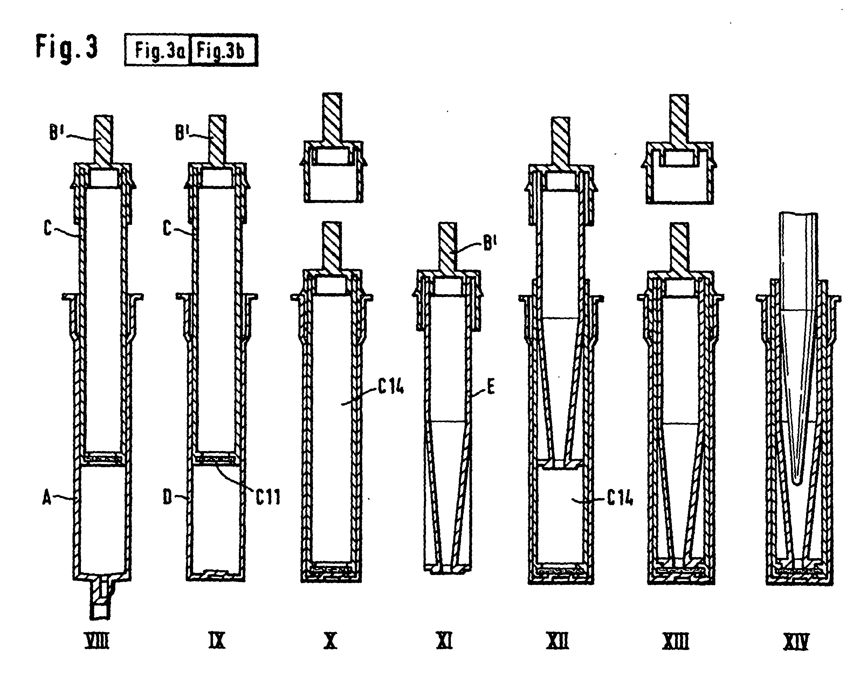

Der Deckel kann bevorzugt in Verfahren zur Isolierung von Nukleinsäuren eingesetzt werden. Ein solches Verfahren ist im folgenden unter Bezugnahme auf FIG 3 (FIG 3a und FIG 3b) beschrieben. Erfindungsgemäße Deckel können hier sogar zweimal eingesetzt werden, nämlich zum Verschluß und der Handhabung des Probengefäßes (A) und des Formkörpers (C) (Ausführungsform 1) sowie des Elutionsgefäße (D) und des Stempels (E) (Ausführungsform 2).

In der besonderen Ausführungsform für die Aufarbeitung nukleinsäurehaltiger Probenlösungen, werden folgende Arbeitsschritte durchgeführt. In einem ersten Schritt (I) wird eine zellhaltige Probenflüssigkeit in einem Probegefäß (A) mit einem Material inkubiert, an welches die Zellen gebunden werden, aus denen Nukleinsäuren gewonnen werden sollen. Hierzu kann dieses Material entweder spezifische Bindeeigenschaften für die Oberfläche der Zellen aufweisen, z. B. durch Immobilisierung von Antikörpern gegen Oberflächenantigene oder ein Absorbermaterial (A16), es kann jedoch auch ein Material mit Filtereigenschaften (A15) vorgesehen sein, durch welches die Zellen zurückgehalten werden, wenn die Flüssigkeit durch das Material durchtritt, z. B. aus dem Probengefäß entfernt wird. Bedingungen für die Immobilisierung von Zellen an Oberflächen sind dem Fachmann bekannt, z. B. aus Methods in Enzymology Vol. 171, Biomembranes / Part R Transport Theory: Cell and Model Membranes, Edited by Sidney Fleischer, Becca Fleischer, Department of Molecular Biology, Vanderbilt University, Nashville, Tennessee.

Während der Inkubation ist das Probengefäß bevorzugt durch einen Deckel (B) verschlossen, um aktiven bzw. passiven Kontaminationsschutz zu gewährleisten. Dieser Deckel entspricht in seiner Konstruktion FIG 1. Er weist Luftdurchtrittsöffnungen (B13) auf, die beim Aufsetzen und Andrücken des Deckels den Austritt von Luft erlauben, sodaß der entstehende Überdruck keine Flüssigkeit aus dem Probengefäß (A) (z. B. über eine untenliegende Austrittsöffnung) herausdrückt.

In einem weiteren Schritt wird die Flüssigkeit aus dem Probengefäß entfernt, während Zellen, deren Nukleinsäuren isoliert werden sollen, in an das Material gebundenem Zustand im Probengefäß zurückbleiben. Sofern es sich bei dem zellbindenden Material um partikuläre Materialien handelt, kann ein Zurückhalten auch dadurch erreicht werden, daß das Material magnetisch ist und ein Magnetfeld von außen an das Probengefäß angelegt wird, welches so stark ist, daß das partikuläre Material im Probengefäß zurückbleibt, wenn die Flüssigkeit entfernt wird. Das Entfernen der Flüssigkeit kann auf verschiedenste Weise geschehen. Beispielsweise kann die Flüssigkeit durch eine räumlich von der Einlaßöffnung (A10) getrennte Auslaßöffnung (A11) entfernt werden. Sofern die Auslaßöffnung im unteren Teil des Probengefäßes und unterhalb der zurückgehaltenen Zellen gelegen ist, kann die Flüssigkeit, z. B. unter Anlegen eines leichten Vakuums, abgesaugt werden. Hierzu kann beispielsweise an der Auslaßöffnung ein Ventil vorgesehen sein, welches sich durch Anlegen von Unterdruck öffnet. Beim Absaugen der Flüssigkeit durch das Ventil kann der Deckel (B) aufgrund der Lufdurchtrittsöffnungen (B13) auf dem Gefäß verbleiben. Die Luft, die durch die Öffnungen in das Gefäß hinein bzw. durchgesaugt wird, wird von Kontaminationen weitgehend durch den Filter (B14) befreit. Die Stege (B20, FIG 1) halten den Druckverlust gering.

Zur weitgehenden Entfernung eventuell störender Probenbestandteile von den Zellen können ein oder mehrere Waschschritte vorgesehen werden. Hierzu wird der Deckel (B) entfernt und in das Probengefäß eine Waschflüssigkeit eingefüllt, in der sich eventuelle Verunreinigungen lösen, die jedoch die Bindung der Zellen an die Oberfläche des zellbindenden Materials nicht wesentlich beeinträchtigen. Solche Waschlösungen sind dem Fachmann z. B. aus den Zellseparationsprotokollen bzw. aus entsprechenden Reinigungskitsprotokollen für Nukleinsäuren bekannt. Sie richten sich im wesentlichen nach der Art der Bindung der Zellen an das Material.

Nachdem gegebenenfalls die letzte Waschlösung aus dem Probengefäß (A) entfernt wurde, werden die gereinigten, angereicherten Zellen mit einer geeigneten Lyseflüssigkeit zur Freisetzung der Nukleinsäuren aus den Zellen in Kontakt gebracht. Die Reagenzien dieser Lyselösung richten sich weitgehend nach der Art der immobilisierten Zellen. Sofern es sich bei den Zellen um Bakterien handelt, enthält die Lyselösung bevorzugt Proteinase K zum Abbau der Zellwand. Gewünschtenfalls wird die Lyse durch Erhitzen bzw. Abkühlen sowie Mischen der Reaktionsmischung unterstützt. Sofern es sich bei dem zellbindenden Material um magnetische Partikel handelt, kann die Mischung auch mittels Magneten vorgenommen werden. Außerdem ist eine Mischung durch Schütteln des Probengefäßes möglich. Am Ende dieses Aufschlusses liegen die zu isolierenden Nukleinsäuren frei in der Lösung vor.

Auch während der Lyse ist das Reaktionsgefäß bevorzugt durch einen Deckel verschlossen, um Kontaminationen aus der Umgebung zu verhindern. Nach Ende der Lyse wird der Deckel, bevorzugt mit Hilfe einer entsprechenden mechanischen Vorrichtung, entfernt. Danach wird in das Probengefäß, welches eine Mischung von Abbauprodukten der Zellen sowie die Nukleinsäuren enthält, ein Formkörper (C) eingeführt, dessen äußere Kontur (C12) auf die innere Kontur (A17) des Probengefäßes abgestimmt ist. Dieser Formkörper ist hohl und in Richtung auf das Probengefäß und die Reaktionsmischung hin durch einen Filter (C11) verschlossen. Die Einführung des Formkörpers (C) erfolgt bevorzugt mit Hilfe eines Bauelementes (B11, FIG 1) des Deckels (B), der außerdem ein Bauelement (B10, FIG 1) enthält, welches zum Verschluß des Probengefäßes geeignet ist. In diesem Fall wird der Formkörper mit dem Deckel (B) ergriffen (II) und gleichzeitig mit dem Verschließen des Probengefäßes in das Probengefäß eingeführt (III). Während dieses Vorgangs wird außerdem die Reaktionsmischung durch den Filter (C11) in den Hohlraum (C14) des Formkörpers eindringen (IV). Durch das Vorsehen des Filters können einerseits große Partikel an dem Eintritt in den Hohlraum gehindert werden und andererseits kann, wenn der Filter nukleinsäurebindende Eigenschaften hat, schon während des Durchtritts der Reaktionsmischung eine Bindung der Nukleinsäuren an den Filter erreicht werden. In diesem Fall ist es zweckmäßig, ein glasfaserhaltiges Filtermaterial zu wählen.

In einem nächsten Schritt wird die verbleibende Lysereaktionsmischung aus der durch A und C gebildeten Vorrichtung entfernt, z. B. durch Absaugen durch eine untenliegende Auslaßöffnung (A11) im Probengefäß. Auch die in den Hohlkörper (C14) des Formkörpers eingedrungene Lösung wird entfernt, so daß der Filter möglichst keine Flüssigkeitsreste mehr enthält. Danach wird der bisher verwendete Deckel (B) entfernt, wobei der Formkörper (C) zunächst im Probengefäß verbleibt (eingerastet) (V).

Gleichzeitig oder anschließend wird ein Elutionsgefäß (D) zur Aufnahme des Formkörpers (C) vorbereitet. Ein gegebenenfalls auf diesem Gefäß befindlicher Deckel (B', Ausführungsform 2) wird entfernt (VI). Bevorzugt wird vor Überführung des Formkörpers (C) in das Elutionsgefäß (D) eine Elutionslösung in das Elutionsgefäß vorgelegt, z. B. einpipettiert. Sie enthält Reagenzien, unter deren Einwirkung die immobilisierten (gebundenen) Nukleinsäuren von dem Material eluiert, d. h. gelöst, werden. Die Zusammensetzung der Elutionslösung und die Bedingungen der Elution richten sich nach der Art der Bindung der Nukleinsäuren an das Material im Filter (C). Geeignete Bedingungen sind dem Fachmann bekannt. Der ursprünglich das Elutionsgefäß verschließende Deckel (B') wird auf das Probengefäß (A) mit dem Formkörper (C) aufgesteckt (VII).

Zur Entnahme des Formkörpers (C) aus dem Probengefäß (A) wird der Formkörper (C) mit dem Deckel (B') entfernt (VIII). Die Kombination aus Deckel und Formkörper wird anschließend in das Elutionsgefäß eingeführt (IX). Bevorzugt enthält der Formkörper (C) Mittel zur Fixierung des Formkörpers im Elutionsgefäß (D), die bewirken, daß der Formkörper nur unter Zerstörung des Formkörpers (C) oder des Gefäßes (D) oder mit einer Kraft, die größer ist als die Kraft, die zur Lösung des Deckels (B') vom Formkörper (C) erforderlich ist, aus dem Gefäß (D) entfernt werden kann. Eine Entfernung des Formkörpers aus dem Elutionsgefäß ist nicht beabsichtigt.

Während des Eindringens des Formkörpers (C) in das Elutionsgefäß dringt die eventuell vorgelegte Elutionslösung in den Filter (C11) und löst dabei die immobilisierte Nukleinsäure von der festen Matrix ab. Je nach Menge der vorgelegten Elutionslösung wird entweder nur der Filter mit der Elutionslösung getränkt oder/und dringt die Elutionslösung mit den wieder gelösten Nukleinsäuren in den Hohlkörper (C14) ein. Damit die Elution der Nukleinsäuren möglichst vollständig verläuft, sollte die Innenkontur des Elutionsgefäßes möglichst dicht an die Außenkontur des Formkörpers angepaßt sein.

In einem folgenden Schritt wird der Deckel (B') von der Kombination aus Formkörper (C) und Elutionsgefäß (D) entfernt (X). Er wird benutzt, um einen Stempel (E) aufzunehmen (XI) und in den Hohlraum des Formkörpers (C) einzuführen (XII). Dieser Deckel greift von innen in den Stempel (E). Der Stempel wird so kräftig gegen den Filter (C11) gepreßt, daß Flüssigkeit aus dem Filter durch eine in der Andrucksfläche befindliche Öffnung in einen Innenraum des Stempels eindringt. Dieser Vorgang ist besonders effektiv, wenn die Andrucksfläche in ihrer äußeren Kontur zumindest in dem Bereich, in dem die Auspressung stattfinden soll, an die innere Kontur des Formkörpers (C) angepaßt ist. Der Stempel (E) kann in dieser Lage, z. B. durch Einrasten, fixiert werden. In der so gebildeten Vorrichtung kann die nukleinsäurehaltige Lösung aufbewahrt werden.

Zur Entnahme einer gewünschten Menge an Nukleinsäurelösung kann der eventuell vorhandene Deckel entfernt (XIII) und über eine Öffnung des Innenraums des Stempels die gewünschte Menge an Lösung entnommen werden, z. B. in einem Pipettiervorgang (XIV). Anschließend kann der Deckel wieder aufgesetzt werden.

Der Deckel ist äußerst vorteilhaft einsetzbar. Er verringert die Kontaminationsgefahr für Proben, die sich in einem durch den Deckel verschlossenen Gefäß befinden und ist in Verfahren, die mit mechanischen Vorrichtungen zum Öffnen und Verschließen der Gefäße arbeiten, einsetzbar. Daneben sind natürlich auch manuelle Verfahren mit Hilfe einfacher Handgeräte zum Öffnen/Verschließen geeignet. Ein sehr günstiger Einsatz ist der Einsatz als Deckel von Gefäßen zur Amplifikation von Nukleinsäuren, z. B. durch PCR.

Ebenfalls Gegenstand der Erfindung ist ein Verfahren zum Verschluß und zur erneuten Öffnung des Gefäßes (A), gekennzeichnet durch
- Einführen eines Formkörpers (C), der von einem Deckel (B) ergriffen ist, in das Gefäß, so daß der Deckel das Gefäß verschließt, und
- Entfernung des Deckels von dem Gefäß und dem Formkörper (C), wobei der Formkörper in dem Gefäß verbleibt.

Hierzu weist der Formkörper bevorzugt Mittel auf, die in ein entsprechendes Mittel des Gefäßes einrasten, so daß die für eine Entfernung des Deckels erforderliche Kraft geringer ist als die für die Entbernung des Formkörpers aus dem Gefäß.

Ein besonders bevorzugtes Verfahren beinhaltet die anschließende Entnahme des Formkörpers aus dem Gefäß mit Hilfe eines Deckels (B'), der den Formkörper mit einer Kraft ergreift, die größer ist als die Kraft, mit der der Formkörper von dem Gefäß festgehalten wird.

Die Bearbeitung eines Deckels mit einem Deckelbearbeitungsgerät der Figur 7 oder 11 kann folgendermaßen vor sich gehen:
- Das Deckelbearbeitungsgerät wird auf den Deckel aufgesetzt, so daß das Bauteil (B12) in den Klemmechanismus (F3), z. B. in Art eines Kugelschreibermechanismus, hineinragt,
- bei Nachlassen des Drucks wird das Bauteil (B12) im Klemmechanismus (F3) festgeklemmt.

Durch erneuten Druck des Deckelbearbeitungsgeräts auf den Deckel wird der Klemmechanismus gelöst und das Bauteil (B12) wird wieder freigegeben.

Diese Vorgänge sind bevorzugt durch Einrasten in den einzelnen Betriebsstellungen (Rastpositionen) abfahrbar. Besonders bevorzugt ist der Fall, daß der Druck auf die äußere Hülle der Vorrichtung ausgeübt wird.

Das Vorsehen einer Feder (F1) bewirkt ein aktives Entlassen des Deckels aus der Klemmvorrichtungen und eine sicher Ablage im Probengefäß auch nach eventueller Schrumpfung nach thermischer Belastung.

Den Figuren ist weiterhin ein vorteilhaftes Merkmal des erfindungsgemäßen Deckelbearbeitungsgerätes zu erkennen, nämlich das im ergriffenen Zustand des Deckels ein ständiger Druck von dem Klemmechanismus auf das Bauteil (B12) ausgeübt wird. Dies ermöglicht ein positionsgenaueres Positionieren des Deckels auf dem zu verschließenden Gerät beim Verschlußvorgang. Das erfindungsgemäße Deckelbearbeitungsgerät ist daher besonders gut für das Verschließen eines Gefäßes mit Hilfe des Deckels und zum Öffnen eines mit Hilfe des Deckels verschlossenen Gefäßes geeignet.

### Bezugszeichenliste:

- **A**: **Probegefäß**
10 Einlaßöffnung
11 Auslaßöffnung
15 Filtermaterial
17 Innere Form
19 Außenform
- **B**: **Deckel**
10 Bauelement zum Verschluß des Probengefäßes A
11 Bauelement zum Ergreifen des Formkörpers C
12 Bauteile zum Ergreifen des Deckels
13 Luftdurchtrittsöffnung
14 Filterelement
16 Dichtlippe
17 Teil des Deckels, der die Öffnung überdeckt
18 Rillen
19 Überhang
20 Abstandshalter
- **C**: **Formkörper**
11 poröse Matrix
12 äußere Kontur
13 Mittel zur Fixierung des Formkörpers im Elutionsgefäß
14 Hohlkörper
15 Mittel zur Befestigung eines Deckels
16 innere Kontur
- **D**: **Elutionsgefäß**
- **E**: **Stempel**
12 Innenraum
14 Entnahmeöffnung
- **F**: **Deckelbearbeitungsgerät**
1 Feder
2 Bauteil zum Abstreifen
3 Klemmechanismus
2001 Gehäuse
2002 Hülse
2003 äußere Hülle (beweglich)
2004 Feder
2005 Kugelschreibermechanismus
2006 Klemmhülse
2007 Feder
2008 Übertragungselement von 2005
2009 Übertragungselement von 2005
2010 Übertragungselement von 2005

### Beispiel

Im Folgenden wird unter Hinweis auf FIG 7 beschrieben, wie mit Hilfe eines Deckelhandlers ein Deckel entnommen bzw. aufgesetzt werden kann.
A) Öffnen des Deckels
   Der Deckelhandler muß in der Stellung mit Kugelschreibermechanismus Rastposition A vorliegen.
   1.) Aufsetzen des Elementes 2003 (äußere Hülle) auf die Stege des Röhrchens.
   2.) Ausübung einer Kraft nach unten bewirkt die Absenkung des Elementes (2006) auf den Deckel bei gleichzeitiger Anspannung der Feder (2004). Jetzt ist ein erster Druckpunkt erreicht.
   3.) Ausübung einer größeren Kraft als in Schritt 2.) bewirkt:
      a.) der Klemmechanismus (F3) schiebt sich über den Dorn (B12),
      b.) die Feder (2007) wird zusammengedrückt,
      c.) der Kugelschreibermechanismus (2005) verkürzt die Distanz II und geht in Rastposition B, wobei Feder (2007) in angespanntem Zustand verbleibt.

      Ein zweiter Druckpunkt ist erreicht.
   4.) Loslassen des Deckelhandlers (Rücknahme der Kraftausübung nach unten) bewirkt das Abziehen des Deckels vom Tube. Die dazu notwendige Kraft zur Überwindung der Reibung resultiert aus der Entlastung der Feder (2004). Die Kraft wird über Element (2003) und den Klemmechanismus (F3) auf den Deckel und die Stege des Röhrchens übertragen.
   5.) Der Deckelhandler mit dem Deckel kann jetzt abgehoben und entfernt werden.
      Der Klemmechanismus (F3) ist durch die Verkürzung von Distanz II jetzt in das Element (2002) zurückgezogen.
      Der Deckel ist nun partiell kontaminationsgeschützt durch Element (2003), ragt jedoch funktionsgemäß 1 - 2 mm über Element (2003) hinaus.
B) Schließen des Deckels
   6.) Aufsetzen des Deckelhandlers mit Deckel auf die Öffnung des Röhrchens und Ausübung einer Kraft nach unten gerichtet schiebt den Deckel in die Öffnung des Röhrchens.
   7.) Verstärkung der Kraft von 6.) bewirkt das vollständige Einschieben des Deckels und Festklemmen über Reibungskräfte. Die Kraft wird über die Elemente 2005, 2009, 2008, 2010 auf den Klemmechanismus (F3) übertragen.
      Gleichzeitig wird Feder 2004 gespannt.
      Ein dritter Druckpunkt ist erreicht.
   8.) Verstärkung der Kraft von 7.) schiebt den Klemmechanismus (F3) aus Element (2006). Gleichzeitig spannt sich Feder (2004) weiter an und gleichzeitig rastet der Kugelschreibermechanismus (2005) wieder in die ursprüngliche Rastposition A zurück und verlängert Distanz II.
   9.) Reduzieren der Kraft nach unten (= Loslassen) schiebt den Deckelhandler vollständig nach oben, wobei die gespannte Feder (2004) über Element (2003) das Röhrchen nieder hält. Die Feder entspannt sich bei diesem Prozeß und der Deckelhandler steht für einen weiteren Öffnungsprozeß bereit.

## Patentansprüche

1. Verfahren zum Verschluß und zur erneuten Öffnung eines Gefäßes (A), **gekennzeichnet durch**
- Einführen eines Formkörpers (C), der von einem Deckel (B) ergriffen ist, in das Gefäß, so daß der Deckel das Gefäß verschließt, wobei der Deckel (B) **gekennzeichnet ist durch** ein Bauelement (B10), das der zu verschließenden Öffnung des Gefäßes angepaßt ist, ein weiteres Bauelement (B11) innerhalb des von Bauelement (B10) umschlossenen Raumes zum Ergreifen eines in das Gefäß (A) einführbaren Formkörpers, wobei das Bauelement (B11) so gestaltet ist, daß es der inneren Kontur (C16) des Formkörpers angepaßt ist und nach Aufdrücken des Bauelements (B11) auf den Formkörper (C), der Formkörper (C) auf dem Bauelement verbleibt, und ein sich im wesentlichen oberhalb des eigentlichen Deckels befindliches, Bauteil (B12) zum Ergreifen des Deckels.
und der Formkörper (C) Mittel aufweist, die beim Einführen des Formkörpers in das Gefäß in ein entsprechendes Mittel des Gefäßes (A) einrasten, so daß die für die Entfernung des Deckels (B) erforderliche Kraft geringer ist als die für die Entfernung des Formkörpers (C) aus dem Gefäß (A) erforderliche Kraft.
- Entfernung des Deckels von dem Gefäß und dem Formkörper (C), wobei der Formkörper in dem Gefäß verbleibt.

2. System bestehend aus einem Deckel (B), einem Formkörper und einem Gefäß (A) zum Verschließen einer Öffnung des Gefäßes (A), Einführen eines Formkörpers in das Gefäß, und erneuten Öffnung des Gefäßes (A), wobei der Deckel **gekennzeichnet ist durch** ein Bauelement (B10), das der zu verschließenden Öffnung des Gefäßes angepaßt ist, ein weiteres Bauelement (B11) innerhalb des von Bauelement (B10) umschlossenen Raumes zum Ergreifen eines in das Gefäß (A) einführbaren Formkörpers, wobei das Bauelement (B11) so gestaltet ist, daß es der inneren Kontur (C16) des Formkörpers angepaßt ist und nach Aufdrücken des Bauelements (B11) auf den Formkörper (C) der Formkörper (C) auf dem Bauelement verbleibt, und ein sich im wesentlichen oberhalb des eigentlichen Deckels befindliches, Bauteil (B12) zum Ergreifen des Deckels, und der Formkörper (C) Mittel aufweist, die beim Einführen des Formkörpers in das Gefäß in ein entsprechendes Mittel des Gefäßes (A) einrasten, so daß die für die Entfernung des Deckels (B) erforderliche Kraft geringer ist als die für die Entfernung des Formkörpers (C) aus dem Gefäß (A) erforderliche Kraft.

3. System gemäß Anspruch 2, **dadurch gekennzeichnet, daß** das Bauelement (B10) der Öffnung innenseitig angepaßt ist.

4. System gemäß Anspruch 2, **dadurch gekennzeichnet, daß** das Bauteil (B 12) zum Ergreifen des Deckels massiv oder/und aus einem thermoplastischen Material gefertigt ist.

5. System gemäß Anspruch 2, **dadurch gekennzeichnet, daß** der Deckel Luftdurchtrittsöffnungen (B13) enthält, die mittels eines Filterelementes (B14) verschlossen sind.

6. System gemäß Anspruch 2, **dadurch gekennzeichnet, daß** das Bauelement (B10) ein Element (B15) enthält, welches im geschlossenen Zustand des Gefäßes in ein entsprechendes Element des Gefäßes einrasten kann.

7. System gemäß Anspruch 2, **dadurch gekennzeichnet, daß** das Bauteil (B 12) im wesentlichen lang und zylindrisch ist.

8. System gemäß Anspruch 7, **dadurch gekennzeichnet, daß** das Bauteil (B 12) an seiner Oberfläche Rillen (B18) aufweist.

9. System gemäß Anspruch 6, **dadurch gekennzeichnet, daß** an dem die Öffnung überdeckenden Teil (B17) des Deckels, in dem sich die Luftdurchtrittsöffnungen befinden, Abstandshalter (B20) angebracht sind, so daß zwischen dem Teil (B17) und der Oberseite des Filterelements ein Zwischenraum verbleibt.

10. System gemäß Anspruch 2, **dadurch gekennzeichnet, daß** der Deckel reversibel vollständig von dem Gefäß getrennt werden kann.

11. System gemäß Anspruch 2, **dadurch gekennzeichnet, daß** das Bauelement (B 11) an der Innenwandung des Deckels befindlich ist.

## Claims

1. Method for closing and reopening a vessel (A), **characterized in that**
- a formed body (C) which is gripped by a lid (B) is inserted into the vessel such that the lid closes the vessel where the lid (B) which is **characterized by** a structural element (B10) which matches the opening of the vessel to be closed, another structural element (B11) within the space enclosed by the structural element (B10) to grip a formed body that can be inserted into the vessel (A), the structural element (B11) being designed such that it matches the inner contour (C16) of the formed body and after the structural element (B11) is pressed onto the formed body (C), the formed body (C) remains on the structural element, and an element (B12) which is located essentially above the actual lid has means for gripping the lid
and the formed body (C) which engages in corresponding means of the vessel (A) when the formed body is inserted into the vessel such that the force required to remove the lid (B) is less than the force required to remove the formed body (C) from the vessel (A).
- Removing the lid from the vessel and the formed body (C) while the formed body remains in the vessel.

2. System comprising a lid (B), a formed body and a vessel (A) for closing an opening of the vessel (A), inserting a formed body into the vessel and reopening the vessel (A), wherein the lid is **characterized by** a structural element (B10) which matches the opening of the vessel to be closed, another structural element (B11) within the space enclosed by the structural element (B10) to grip a formed body that can be inserted into the vessel (A), the structural element (B11) being designed such that it matches the inner contour (C16) of the formed body and after the structural element (B11) is pressed onto the formed body (C), the formed body (C) remains on the structural element and an element (B12) which is located essentially above the actual lid has means for gripping the lid and the formed body (C) which engages in corresponding means of the vessel (A) when the formed body is inserted into the vessel such that the force required to remove the lid (B) is less than the force required to remove the formed body (C) from the vessel (A).

3. System as claimed in claim 2, **characterized in that** the structural element (B10) matches the inner side of the opening.

4. System as claimed in claim 2, **characterized in that** the structural element (B12) which serves to grip the lid is manufactured from a solid or/and a thermoplastic material.

5. System as claimed in claim 2, **characterized in that** the lid contains airvents (B13) which are closed by a filter element (B14).

6. System as claimed in claim 2, **characterized in that** the structural element (B10) contains an element (B15) which can engage in a corresponding element of the vessel when the vessel is closed.

7. System as claimed in claim 2, **characterized in that** the structural element (B12) is essentially long and cylindrical.

8. System as claimed in claim 7, **characterized in that** the structural element (B12) has grooves (B18) on its surface.

9. System as claimed in claim 6, **characterized in that** spacers (B20) are attached to the part (B17) of the lid which covers the opening in which the airvents are located such that a space remains between the part (B17) and the upper side of the filter element.

10. System as claimed in claim 2, **characterized in that** the lid can be reversibly and completely separated from the vessel.

11. System as claimed in claim 2, **characterized in that** the structural element (B11) is located on the inner wall of the lid.

## Revendications

1. Procédé pour la fermeture et pour la réouverture d'un récipient (A), **caractérisé par** le fait de :
- introduire un corps moulé (C), qui est saisi par un couvercle (B), dans le récipient, de telle sorte que le couvercle ferme le récipient, le couvercle (B) étant **caractérisé par** un élément de structure (B10) dont la dimension correspond à celle de l'ouverture du récipient apte à être fermée, par un élément de structure supplémentaire (B11) à l'intérieur de l'espace renfermé par l'élément de structure (B10), destiné à saisir un corps moulé qui peut être inséré dans le récipient (A), dans lequel l'élément de structure (B11) est réalisé de telle sorte qu'il épouse le contour interne (C16) du corps moulé et de telle sorte qu'après l'application de l'élément de structure (B11) par pression sur le corps moulé (C), le corps moulé (C) reste sur l'élément de structure, et par un constituant (B12), se trouvant essentiellement au-dessus du couvercle proprement dit, destiné à saisir le couvercle, et le corps moulé (C) présente des moyens qui, lors de l'insertion du corps moulé dans le récipient, viennent s'insérer par déclic dans un moyen correspondant du récipient (A), si bien que la force requise pour retirer le couvercle (B) est inférieure à la force requise pour retirer le corps moulé (C) du récipient (A) ;
- retirer le couvercle du récipient et du corps moulé (C), le corps moulé restant dans le récipient.

2. Système constitué par un couvercle (B), par un corps moulé et par un récipient (A), pour la fermeture d'une ouverture du récipient (A), pour l'introduction d'un corps moulé dans le récipient et pour la réouverture du récipient (A), dans lequel le couvercle est **caractérisé par** un élément de structure (B10) dont la dimension correspond à celle de l'ouverture du récipient apte à être fermée, par un élément de structure supplémentaire (B11) à l'intérieur de l'espace renfermé par l'élément de structure (B10), destiné à saisir un corps moulé qui peut être inséré dans le récipient (A), dans lequel l'élément de structure (B11) est réalisé de telle sorte qu'il épouse le contour interne (C16) du corps moulé et de telle sorte qu'après l'application de l'élément de structure (B11) par pression sur le corps moulé (C), le corps moulé (C) reste sur l'élément de structure, et par un constituant (B12), se trouvant essentiellement au-dessus du couvercle proprement dit, destiné à saisir le couvercle, et le corps moulé (C), présente des moyens qui, lors de l'insertion du corps moulé dans le récipient, viennent s'insérer par déclic dans un moyen correspondant du récipient (A), si bien que la force requise pour retirer le couvercle (B) est inférieure à la force requise pour retirer le corps moulé (C) du récipient (A).

3. Système selon la revendication 2, **caractérisé en ce que** l'élément de structure (B10) épouse la forme de l'intérieur de l'ouverture.

4. Système selon la revendication 2, **caractérisé en ce que** le constituant (B12) destiné à saisir le couvercle est réalisé sous la forme d'un élément plein et/ou à partir d'une matière thermoplastique.

5. Système selon la revendication 2, **caractérisé en ce que** le couvercle contient des ouvertures de passage pour l'air (B13) qui sont fermées à l'aide d'un élément filtrant (B14).

6. Système selon la revendication 2, **caractérisé en ce que** l'élément de structure (B10) contient un élément (B15) qui, à l'état fermé du récipient, peut venir s'insérer par déclic dans un élément correspondant du récipient.

7. Système selon la revendication 2, **caractérisé en ce que** le constituant (B12) est essentiellement long et cylindrique.

8. Système selon la revendication 7, **caractérisé en ce que** le constituant (B12) présente des cannelures (B18) à sa surface.

9. Système selon la revendication 6, **caractérisé en ce qu'**on applique sur la partie (B17) du couvercle recouvrant l'ouverture, partie dans laquelle se trouvent les ouvertures de passage pour l'air, des écarteurs (B20) de telle sorte qu'un espace libre subsiste entre la partie (B17) et le côté supérieur de l'élément filtrant.

10. Système selon la revendication 2, **caractérisé en ce que** le couvercle peut être séparé du récipient de manière complètement réversible.

11. Système selon la revendication 2, **caractérisé en ce que** l'élément de structure (B11) est disposé contre la paroi interne du couvercle.
